# EUROPEAN PATENT SPECIFICATION

(11) **EP 1 011 960 B1**
(45) Date of publication and mention of the grant of the patent: **28.11.2001**
(21) Application number: 97944651.5
(22) Date of filing: 09.10.1997
(51) Int. Cl.: B29D 23/00, B29C 65/48, B29C 65/18, F16L 11/22

(54) **PROCESS AND DEVICE FOR PRODUCING A FLEXIBLE HOSE COMBINATION**
VERFAHREN UND VORRICHTUNG ZUR HERSTELLUNG EINER FLEXIBLEN SCHLAUCHKOMBINATION
PROCEDE ET DISPOSITIF POUR PRODUIRE UN ENSEMBLE TUYAU FLEXIBLE

(30) Priority: 10.10.1996 BE 9600853
(43) Date of publication of application: 28.06.2000
(73) Proprietor: PLASTIFLEX EUROPE N.V., 3583 Paal-Beringen (BE)
(72) Inventor: DIELS, Domin, B-2275 Gierle (BE)
(74) Representative: Luys, Marie-José A.H.
(86) International application number: BE9700116
(87) International publication number: WO9821024

(56) References cited:
- EP-A- 0 574 371
- DE-U- 9 103 009
- FR-A- 1 565 116
- GB-A- 875 886
- US-A- 2 222 611
- US-A- 2 940 095
- US-A- 4 171 118
- US-A- 4 467 837
- US-A- 5 087 235
- DATABASE WPI Section Ch, Derwent Publications Ltd., London, GB; Class A00, AN 68-76922P XP002033839 & SU 179 913 A (KUZ'MENKO PI)

## Description

This invention relates to a process for producing a flexible hose combination according to the preamble of the first claim.

Such flexible hose combinations are known from EP-A-574371. The hose combinations disclosed in EP-A-574371 comprise a vacuum hose with a large diameter, containing at least one second tube with a much smaller diameter. The second tube is attached in longitudinal direction to the inner wall of the first vacuum hose, through its external wall.

Such hose combinations are frequently applied, for instance in vacuum cleaners or other industrial appliances. In that case, the second tube may for instance contain electrical conductors, to realise an electrical connection, while the first vacuum hose is for instance provided for transporting a liquid or a gas, Such hose combinations may also be used for the simultaneous transport of two liquids, the first liquid being transported through the first vacuum hose, and the second liquid through the second tube.

The first vacuum hose is mostly a flexible vacuum hose of a plastic material. Such vacuum hoses are produced, among others, by means of the so-called blow molding process, or by spirally winding a plastic profile. They are mostly made of a flexible plastic material with a so-called ''memory", as a result of which the hose returns to its original shape after having been compressed or bent, for instance. The external wall of the vacuum hose comprises a plurality of protrusions and grooves, that extend substantially parallel to each other in cross direction of the hose. Because the grooves are capable of standing more or less open, the hose may be stretched lengthwise upon application of a tensile force. Moreover, the hose remains open when the pressure inside the hose is highly reduced, for example to vacuum.

The second tube is usually a plastic hose with a smooth wall or a wall with protrusions and grooves.

It is the aim of this invention to provide a process for producing the above described flexible hose combination, in a simple and reliable way.

This is achieved according to the invention with the measures described in the characterising part of the first claim.

Upon application of the hot adhesive to the external wall of the second tube, a surface layer of the external wall of the second tube is molten, upon contact with the hot adhesive.

The application of the hot, liquid adhesive to the second tube, and the introduction of the second tube into the first vacuum hose are carried out almost simultaneously. As a consequence, the temperature of the adhesive is sufficiently high to melt a surface layer of the inner wall of the first vacuum hose, upon the almost immediately following contacting of the inner wall of the first vacuum hose with the adhesive, by compressing the first vacuum hose.

Also due to the pressure exerted during compression, the adhesive is spread out, and as a consequence new adhesive with a higher temperature is transported to the surface of the adhesive layer, and the melting of a surface layer of the inner wall of the first vacuum hose is stimulated.

Following compression, the molten surface layers of the first vacuum hose and the second tube can also flow and spread out and mix with the hot, liquid adhesive. As a result, one continuous liquid phase is formed, in which the hot adhesive and the molten surface layers are mixed and form one common layer.

Because the first hose and second tube are not heated themselves, they have a much lower temperature than the adhesive, and the liquid phase solidifies quite rapidly, Thus, one solid adhesion layer is formed, wherein the inner wall of the first vacuum hose, the adhesive and the external wall of the second tube continuously merge into one another. The adhesive, the first hose and second tube constitute as a matter of fact one entity

According to the invention, the adhesive is chosen in such a way as to show a good affinity with the material of which both the first hose and the second tube are made.

The adhesive is also chosen in such a way that its temperature in the liquid state is sufficiently high to melt the surface layers of the first hose and second tube. According to the invention, melting is understood to mean the transformation of the plastic material of said hoses from the solid to the liquid phase.

Surprisingly it has been found that with the process of this invention, the suppleness and flexibility of the hose combination is preserved.

Because the temperature of the adhesive is adjustable, and also determined by the nature of the selected adhesive, it is possible to control the heating and thus the melting of the surface layer of the inner wall of the first vacuum hose and of the external wall of the second tube. In this way, it Is possible to prevent the structure of protrusions and grooves, which is also responsible for the flexibility and extensibility of the hose, from being affected. In this way, also the aesthetical appearance of the hose may be preserved.

According to the invention, preferably, the second tube is introduced into a mandrel provided with a recess for receiving a predetermined part of the second tube, and the mandrel is introduced in longitudinal direction into a predetermined part of the first vacuum hose together with the second tube. After compression, the mandrel is removed from the hose combination.

The use of the mandrel allows to facilitate and improve the positioning of the adhesive, and to attach the second tube to the first vacuum hose, in the desired way and on the desired location. For example, the second tube may be attached in such a way that its longitudinal axis extends parallel with the longitudinal axis of the first vacuum hose. The second tube may be somewhat twisted, for example, and be introduced as such into the first vacuum hose.

During compression, the first vacuum hose is preferably supported over almost its entire length, so as to exert a constant pressure over the entire length of the hose, and achieve a uniform adhesion.

Preferably, the first vacuum hose is compressed with a pressure between 0 and 150 bar.

These pressures are particularly favourable and allow to obtain a good adhesion of the second tube to the first vacuum hose, without thereby involving a bursting, breaking down or leaking of the first vacuum hose, as a result of the exerted pressure.

According to the invention, the first hose and second tube, as well as the adhesive are preferably made of the same material, and the second tube is welded into the first vacuum hose.

More preferably, the first hose and second tube are made of polyethylene and the welding agent is hot, molten polyethylene.

According to the invention, the second tube may also be glued to the first vacuum hose. Thereby, a hot, liquid hot-melt glue is used as an adhesive and is applied to the second tube, and the second tube is glued into the first vacuum hose.

This process is usually applied in case the first vacuum hose and the second tube are made of different materials. The glue is chosen such that it shows a good affinity, both to the material the second tube is made of, as to the material the first vacuum hose is made of, so as to realise a good flow and mixing of the molten phases, and a good adhesion.

The preferred glue is a hot-melt glue. Such a hot-melt glue is applied to the second tube in a hot, molten state. Because a surface layer of the first hose and second tube are molten by the hot glue, and the molten layers merge into one another as a consequence of the exerted pressure, a continuous transition from the first vacuum hose to the glue layer and the second tube is formed.

With the process of the invention it is also possible to attach two or more tubes with a smaller diameter into a hose with a larger diameter.

The invention also relates to a device for producing the above described flexible hose combinations.

The device according to the invention comprises means for applying a hot adhesive in the liquid state, in longitudinal direction to the external wall of the second tube, means for receiving a predetermined part of the second tube, and means for introducing this part in a predetermined part of the inner space of the first vacuum hose, almost simultaneously with the application of the adhesive. The device according to the invention also comprises means for compressing said predetermined part of the first vacuum hose, in longitudinal direction, in such a way as to bring the adhesive into contact with the inner wall of the first vacuum hose, and means for at least partially supporting the predetermined part of the first vacuum hose.

With such a device, it is possible to produce above described flexible hose combinations in a simple way, to apply the adhesive at the optimal temperature, and to bring about a good, uniform adhesion of the second tube to the first vacuum hose. With such a device, it is also possible to introduce the second tube in any desired way and position into the first vacuum hose.

In the device according to the invention, the means provided for containing the second tube preferably comprise at least one mandrel, which is in longitudinal direction provided with at least one recess for receiving one or more second tubes. The use of the mandrel also allows to exert an almost uniform, continuous pressure over the length of the second tube which is being attached to the wall of the first vacuum hose. This allows to realise a good contact between the inner surface of the first vacuum hose and the adhesive on the second tube, and a good adhesion of the second tube in longitudinal direction in the first vacuum hose.

Because the mandrel is in longitudinal direction provided with at least one recess for receiving a second tube, it is possible to improve the positioning ofthe adhesive. it is also possible to keep the second tube in the longitudinal direction in its position and to prevent it from making undesired movements, or from being adhered in an undesired position to the first vacuum hose.

The mandrel can, if so desired, comprise several recesses so as to simultaneously introduce several tubes into the first vacuum hose. In that case, means are provided for applying adhesive to each tube separately.

In case the mandrel comprises only one recess, two or more second tubes may also be introduced successively into the first vacuum hose.

The device according to the invention is preferably provided with a turning table for receiving several mandrels. This allows to produce successively several hose combinations in a fast, efficient and cheap way, and to use the device in an almost continuous manner.

The invention is further elucidated by means of the appended figures and description of the figures. In the figures below, the same reference numbers always refer to the same parts.
Figure 1 shows a first vacuum hose equipped with a mandrel containing the second tube, whereby the mandrel is loose in the first vacuum hose;
Figure 2 shows a compressed hose combination;
Figure 3 shows a hose combination according to the invention, whereby the first vacuum hose contains one second tube;
Figure 4 shows a side view of the device according to the invention;
Figure 5 shows a top view of the device according to the invention;
Figure 6 shows a view on the outside of the hose;
Figure 7 shows a detail of the wall structure of the first vacuum hose.

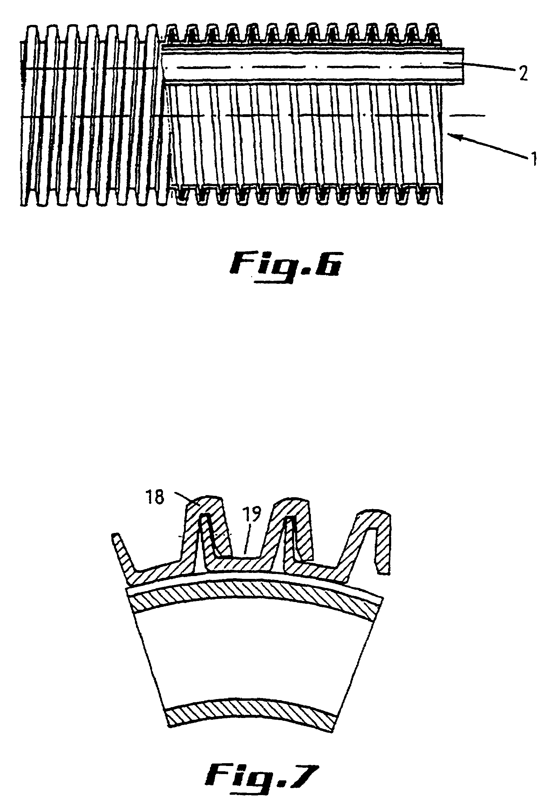

The flexible hose combination shown in figure 3 comprises a first vacuum hose 1 with an inner wall 6, and a second tube 2 with an external wall 7. The second tube 2 is attached to the first vacuum hose through an adhesive 5. Also a plurality of second tubes 2 may be attached to the first vacuum hose 1.

The first vacuum hose 1 is a flexible hose, the wall of which comprises a profile with protrusions and grooves extending substantially parallel to each other in cross direction of the hose. The protrusions and grooves may also extend spirally around the longitudinal axis of the vacuum hose. Such hoses may for instance be produced by means of the so-called blow molding process, or by spirally winding of a plastic profile. The vacuum hose 1 may have a smooth or a corrugated inner wall 6, or an inner wall with protrusions and grooves. The second tube 2 may be the same as the first vacuum hose 1, or a tube with a smooth wall.

The second tube 2 may be a hollow tube, in which one or more electrical conductors, or an additional hollow tube ace introduced, if so desired. The second tube 2 may also be a cable with built-in electrical conductors.

The first vacuum hose 1 may have various shapes. It may for instance be cylindrical or conical in form. The second tube 2 may also be either cylindrical or conical in form. The second tube 2 usually has a much smaller diameter than the first vacuum hose 1. The diameter of the second tube 2 is preferably chosen in such a way, that upon the displacement of the second tube 2 into the first vacuum hose 1, the adhesive 5 on the second tube 2 is not contacted with the inner wall 6 of the first vacuum hose 1.

The second tube 2 may have the same length as the first vacuum hose 1, or a different length. The second tube 2 may be attached to the first vacuum hose 1 over its entire length, or only part of its length.

The first vacuum hose 1 and the second tube 2 may be made of various materials, commonly known to the man skilled in the art. The first hose 1 and second tube 2 may be made of the same material or of different materials. They are preferably made of the same material. The first vacuum hose 1 is preferably made of a plastic material having a so-called "memory". Such a hose returns to its original shape after having been distorted. Examples of suitable plastic materials are: polyethylene, LLDPE, VLDPE, polypropylene, PVC, polyester or copolymers of these materials. Preferably, the first vacuum hose 1 and the second tube 2 are made of a polyethylene copolymer.

The adhesive 5 is chosen in such a way as to show a good affinity with the material the first hose 1 and second tube 2 are made of. This allows to obtain an optimal mixing of the materials in the molten state, and thus an optimal adhesion of the second tube 2 to the first vacuum hose 1.

The adhesive 5 is also chosen in such a way that its temperature in the liquid state is sufficiently high to melt a surface layer of the second tube 2, when it is applied to the second tube, and to melt a surface layer of the first vacuum hose 1 upon compression, Thereby, according to the invention, to melt is understood to mean the transformation of the plastic material of said hoses 1 and 2 from the solid to the liquid phase. Thereby, the adhesive may be chosen in such a way that its melting point is substantially higher than the softening point of the material the first vacuum hose 1 and the second tube 2 are made of.

Preferably, the adhesive 5 is also flexible in the solid state, so as to prevent the flexibility of the hose combination from being adversely influenced by the presence of the adhesive.

The amount of adhesive 5 may be varied, and varies among others with the affinity for the materials the first hose 1 and second tube 2 are made of.

The adhesive 5 may be applied to the external wall 7 of the second tube 2 in various ways. The adhesive 5 may be applied as a continuous strip in longitudinal direction to the second tube 2. The adhesive 5 may also be applied as an interrupted strip in longitudinal direction to the external wall 7 of the second tube 2.

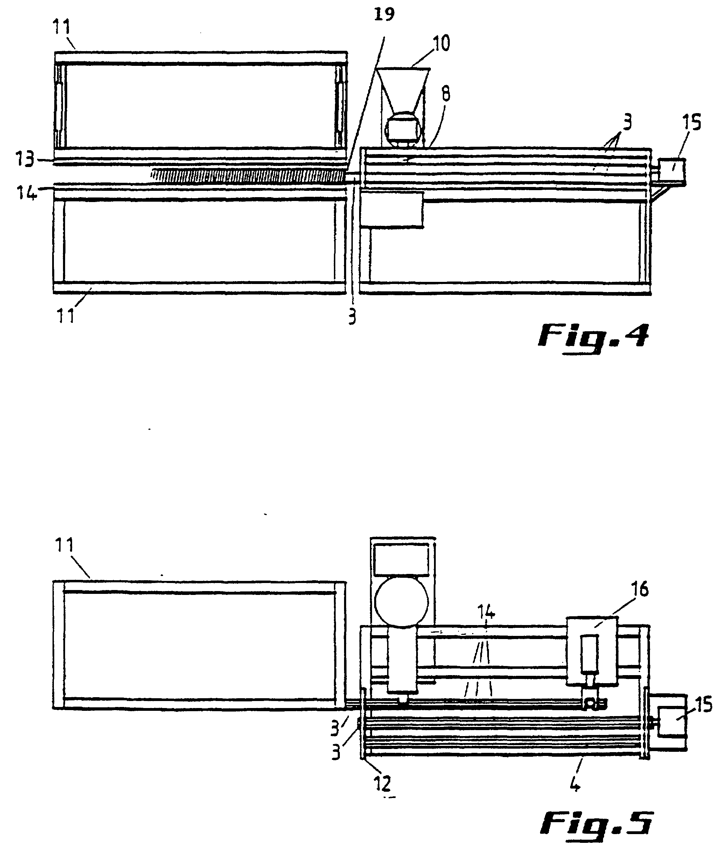

In figure 1, the mandrel 3 together with the second tube 2, is introduced into the first vacuum hose 1 in longitudinal direction, but the adhesion has not yet been effectuated. The mandrel 3 is provided with a recess 4 for receiving the second tube 2. A strip of an adhesive 5 is applied to the external wall 7 of the second tube 2, in longitudinal direction of the tube 2, in order to attach the second tube 2 to the first vacuum hose 1.

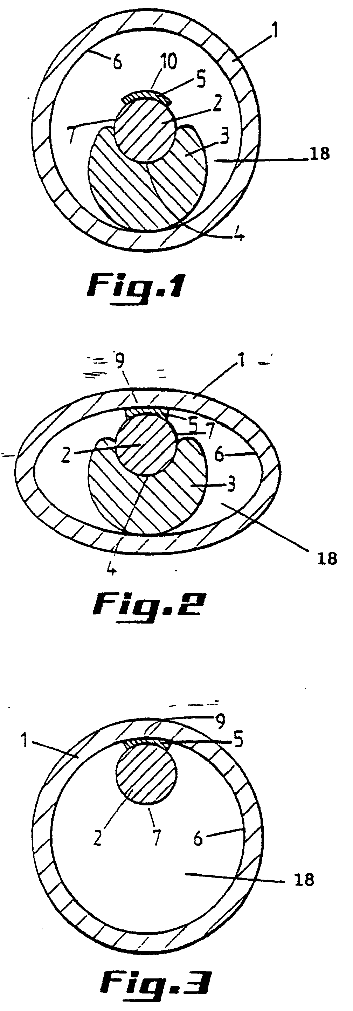

In figure 2 the flexible hose combination is shown in compressed condition. During compression, a part 9 of the inner surface 6 of the first vacuum hose 1 is In contact with the adhesive 5.

The device according to the invention shown in figure 4 comprises a turning table 12 for receiving one or several mandrels 3. Thereby, each mandrel 3 is provided with at least one recess 4 for receiving one or more second tubes 2. The mandrel 3 may be provided for receiving the second tube 2 over its entire length, or a predetermined part of its length. The device also comprises means 15 and 16 for displacing the mandrel 3 with the second tube 2, to a predetermined part of the inner space 18 of the first vacuum hose 1. The device further comprises a device 10 for heating and melting the adhesive 5, and applying the adhesive 5 to the second tube 2 through a metering opening 8.

The compression device 11 is preferably a hydraulic compression device with a top 13 and a bottom support 14. The bottom support 14 comprises for instance a recess for at least partly receiving and supporting the first vacuum hose 1. The compression device 11 is provided with means 13, 14 for compressing the first vacuum hose 1, so as to bring the inner wall 6 of the first vacuum hose 1 into contact with the adhesive 5 on the second tube 2.

Upon producing the flexible hose combination according to the invention, the first vacuum hose 1 is introduced into the recess in the bottom support 14. The mandrels 3 present in the turning table 12 are each provided with at least one second tube 2. The mandrel 3 with the second tube 2 is moved in the direction of the compression device 11. Thereby, the second tube 2 passes in longitudinal direction under the metering opening 8, and a strip of hot, liquid or molten adhesive 5 is applied, through the metering opening 8, in longitudinal direction to the external wall 7 of the second tube 2. Preferably, the strip of adhesive 5 extends parallel with the longitudinal axis of the second tube 2, but may also be applied in another way. The adhesive 5 may be applied as a continuous strip, or as an interrupted strip. The temperature of the hot adhesive 5 is adjusted in such a way as to be sufficiently high to melt a surface layer of the external wall 7 of the second tube 2. Most plastics are bad heat conductors, so that the hot adhesive will usually only be capable of melting a surface layer of tube 2.

The mandrel 3 with a predetermined part of the second tube 2 are introduced in longitudinal direction into the inner space of the first vacuum hose 1, in a predetermined position. Then, the first vacuum hose 1 is compressed during 5 - 50 seconds by bringing the top support 13 to the bottom support 14. The exerted pressure usually amounts to 0 - 150 bar. Thereby, a part 9 of the inner wall of the first vacuum hose 1 is contacted with the hot adhesive 5 on the external wall 7 of the second tube 2. It is possible to compress and support the first vacuum hose 1 over its entire length or a predetermined part of its length.

The time lapse between the application of the adhesive 5 to the second tube 2 and the compression of the first vacuum hose1 is preferably kept as short as possible, so as to prevent the adhesive 5 from cooling down too much. It is indeed important that the temperature of the adhesive 5 during the compression is sufficiently high to allow the adhesive 5 to melt at least a part of the inner wall 6 of the first vacuum hose 1. Upon compression, a mixing of the molten surface of the inner wall 6 of the first vacuum hose 1 with the adhesive may then occur.

Upon compression, the molten surface layers and the adhesive 5 flow into each other under the influence of the exerted pressure, thus forming as a matter of fact one liquid phase. In this liquid phase, the surface of the second tube 2, the hot adhesive 5 and the surface of the first vacuum hose 1 merge as a matter of fact continuously into each other. Because hose 1 and tube 2 themselves are not heated, and because plastic is a bad heat conductor, they have a much lower temperature than the adhesive 5, and the liquid phase solidifies. In that way, a continuous transition from the second tube 2 to the adhesive 5 and further to the first vacuum hose 1 is formed.

After the compression is terminated, the compression device is opened, and the flexible hose combination is removed from the device.

A new first vacuum hose 1 is introduced into the bottom support 14. The turning table 12 is turned so that a new mandrel 3 with a second tube 2 is ready for attachment into the first vacuum hose 1.

Since most plastics are bad heat conductors, upon application, the hot adhesive 5 will be able to melt only a surface layer of the external wall 7 of the second tube 2. Usually, the adhesive will not be able to melt the wall of the second tube 2 over its entire thickness in such a way that the whole wall flows out.

Since most plastics are bad heat conductors, upon compression, the hot adhesive 5 will be able to melt only a surface layer of the inner wall 6 of the first vacuum tube 1. Usually, the adhesive 5 will not be able to heat the wall of the first vacuum hose 1 over its entire thickness. Because only a surface layer is heated, it is possible to prevent the structure of protrusions and grooves of the hose from being deteriorated. This structure is responsible for the suppleness and flexibility of the hose. Consequently, the process according to the invention allows to produce a flexible hose combination, whereby the suppleness and flexibility of the hoses is substantially preserved.

Such a preservation of flexibility usually cannot be obtained when the adhesive 5 is heated by means of an external heating, after having been applied to the first vacuum hose 1 or the second tube 2. Since plastics are rather bad heat conductors, a rather large heat supply from an external heating would be required for a complete heating of the adhesive layer 5. Thereto, the temperature of the external heating will usually have to be much higher than the temperature of the adhesive 5. As a consequence, there is a risk that also a substantial part of the wall of the tube 2 is heated and softened, so that the structure of the wall is partially or entirely lost.

Usually, such a preservation of flexibility will neither be obtained if the adhesive 5 is heated when it is already in contact with the first hose 1.

Such a preservation of flexibility may neither be obtained by heating the hoses 1, 2 by means of an external heating, before or after the application of the adhesive. In that case, the temperature of the hoses 1, 2 will be used for melting the adhesive 5. Because the melting point of the adhesive 5 will usually be equal to or higher than the softening point of the material the hoses 1, 2 are made of, and because plastics are bad heat conductors, the hoses 1, 2 will have to be heated to at least their melting or softening temperature in order to be capable of heating the adhesive 5. At these temperatures, the hoses 1, 2 soften, and the hose material starts to flow, so that the structure of grooves and protrusions, which is responsible for the flexibility of the hose, is lost.

The flexible hose combinations thus produced may be further equipped with the required coupling pieces, for coupling to other machines, a vacuum cleaner for instance, or other industrial appliances. Coupling pieces are preferably welded to the first vacuum hose 1.

The invention is not limited to the shown embodiments. The dimensions of the first vacuum hose, and the number and dimensions of the second tubes may vary, depending on the application. Also the construction of the device may vary. The device may for instance comprise one or several turning tables; the number of mandrels In the turning table may vary; the device for exerting pressure on the first vacuum hose may also be constructed in another way.

### Reference List

- 1: first vacuum hose
- 2: second tube
- 3: mandrel
- 4: recess in the mandrel
- 5: adhesive
- 6: inner wall of first vacuum hose
- 7: external wall of second tube
- 8: metering opening
- 9: contact surface
- 10: melting device
- 11: compression device
- 12: turning table
- 13: upper support
- 14: lower support
- 15: means for rotating the turning table
- 16: means for moving the mandrel
- 17: entrance
- 18: inner space

## Claims

1. Process for producing a flexible hose combination comprising a first vacuum hose (1) with a large diameter, an inner wall (6) and an entrance (17), in which first vacuum hose (1), in longitudinal direction, at least one second tube (2) with a small diameter is attached through its external wall (7), over a predetermined part of its length, **characterised in that** a hot adhesive (5) in the liquid state is applied in longitudinal direction to said predetermined part of the external wall (7) of the second tube (2), and said predetermined part of the second tube (2) is introduced through said entrance (17), in longitudinal direction into a predetermined part of the first vacuum hose (1) almost simultaneously with the application of the adhesive, after which said predetermined part of the first vacuum hose (1) is compressed in such a way that the inner wall (6) of the first vacuum hose is contacted with the adhesive (5), whereby, during compression, said predetermined part of the first vacuum hose (1) is supported over at least part of its length.

2. Process according to claim 1, **characterised in that** said predetermined part of the second tube (2) is previously introduced into a mandrel (3) provided with a recess (4) for receiving said predetermined part, and the mandrel (3) is introduced in longitudinal direction into the predetermined part of the first vacuum hose (1), with the second tube (2), and the mandrel (3) is removed from the hose combination after compression.

3. Process according to any one of claims 1 or 2, **characterised in that** the adhesive is applied over almost the entire length of the second tube (2), and the second tube (2) is attached to the first vacuum hose (1) over almost its entire length, and the first vacuum hose (1) is compressed over almost its entire length and is supported during said compression over almost its entire length.

4. Process according to any one of claims 1 to 3, **characterised in that** the first vacuum hose (1) is compressed with a pressure between 0 and 150 bar.

5. Process according to any one of claims 1 to 4, **characterised in that** the first vacuum hose (1) is compressed during 1 - 50 s, preferably 5 - 25 s.

6. Process according to any one of claims 1 to 5, **characterised in that** the first vacuum hose (1) and the second tube (2) are made of the same material, and the adhesive (5) is a welding agent, and the second tube (2) is welded in the first vacuum hose (1).

7. Process according to claim 6, **characterised in that** the first vacuum hose (1) and second tube (2) are made of polyethylene, and the welding agent (5) is hot molten polyethylene.

8. Process according to any one of claims 1 to 5, **characterised in that** the adhesive is a hot-melt glue and the second tube (2) Is glued into the first vacuum hose (1).

9. Process according to any one of claims 1 to 8, **characterised in that** the second tube (2) comprises at least one electrical conductor.

10. Device for producing a flexible hose combination, comprising a first vacuum hose (1) with a large diameter, an inner wall (6) and an entrance (17), in which first vacuum hose (1), in longitudinal direction, at least one second plastic tube (2) with a small diameter is attached through its external wall (7), over a predetermined part of its length, **characterised in that** the device comprises means (8, 10) for applying a hot adhesive (5) in the liquid state, in longitudinal direction to the external wall (7) of the second tube (2), and means (3) that are provided for containing a predetermined part of the second tube (2) and for introducing this part in a predetermined part of the first vacuum hose (1), almost simultaneously with the application of the adhesive (5), and means (13, 14) for compressing a predetermined part of the first vacuum hose (1) in longitudinal direction, in such a way that the adhesive (5) is contacted with a predetermined part of the inner wall (6) of the first vacuum hose, and means (14) for at least partially supporting the first vacuum hose (1).

11. Device according to claim 10, **characterised in that** said means (3) comprise a mandrel equipped with at least one recess (4) for receiving a predetermined part of the second tube (2).

12. Device according to any one of claims 10 or 11, **characterised in that** the device is provided with a turning table (12) for containing a plurality of mandrels (3).

## Patentansprüche

1. Verfahren zur Herstellung einer flexiblen Schlauchkombination umfassend einen ersten Vakuumschlauch (1) mit einem großen Durchmesser, eine innere Wand (5) und einen Eingang (17), bei dem in dem ersten Vakuumschlauch (1) in Längsrichtung wenigstens ein zweites Rohr (2) mit einem kleinen Durchmesser mittels seiner äußeren Wand (7) über einen vorbestimmten Teil seiner Länge befestigt ist,
**dadurch gekennzeichnet, dass** ein Heißklebstoff (5) im flüssigen Zustand in Längsrichtung auf den vorbestimmten Teil der äußeren Wand (7) des zweiten Rohres (2) aufgebracht wird und der vorbestimmte Teil des zweiten Rohrs (2) durch den Eingang (17) in Längsrichtung in einen vorbestimmten Teil des ersten Vakuumschlauchs (1) nahezu gleichzeitig mit der Aufbringung des Klebstoffs eingeführt wird und hiernach der vorbestimmte Teil des ersten Vakuumschlauchs (1) in der Art komprimiert wird, dass die innere Wand (6) des ersten Vakuumschlauchs mit dem Klebstoff (5) in Kontakt tritt, wobei während der Komprimierung der vorbestimmte Teil des ersten Vakuumschlauchs (1) zumindest über Teile seiner Länge gestützt wird.

2. Verfahren nach Anspruch 1,
**dadurch gekennzeichnet, dass** der vorbestimmte Teil des zweiten Rohrs (2) zuvor in einen Dorn (3) eingeführt wird, welcher mit einer Vertiefung (4) zur Aufnahme des vorbestimmten Teils versehen ist und der Dorn (3) in Längsrichtung in den vorbestimmten Teil des ersten Vakuumschlauchs (1) mit dem zweiten Rohr (2) eingeführt wird und der Dorn (3) nach der Komprimierung von der Schlauchkombination entfernt wird.

3. Verfahren nach einem der Ansprüche 1 oder 2,
**dadurch gekennzeichnet, dass** der Klebstoff über nahezu die gesamte Länge des zweiten Rohrs (2) aufgebracht wird und das zweite Rohr (2) an dem ersten Schlauch (1) über nahezu seine gesamte Länge befestigt wird und der erste Vakuumschlauch (1) über nahezu seine gesamte Länge komprimiert wird und während der Komprimierung über nahezu seine gesamte Länge unterstützt wird.

4. Verfahren nach einem der Ansprüche 1 bis 3,
**dadurch gekennzeichnet, dass** der erste Vakuumschlauch (1) mit einem Druck zwischen 0 und 150 bar komprimiert wird.

5. Verfahren nach einem der Ansprüche 1 bis 4,
**dadurch gekennzeichnet, dass** der erste Vakuumschlauch (1) zwischen 1 bis 50 s, vorzugsweise 5 bis 25 s komprimiert wird.

6. Verfahren nach einem der Ansprüche 1 bis 5,
**dadurch gekennzeichnet, dass** der erste Vakuumschlauch (1) und das zweite Rohr (2) aus dem gleichen Material bestehen und der Klebstoff (5) ein Verschweißungsmittel ist und das zweite Rohr (2) in den ersten Vakuumschlauch (1) geschweißt wird.

7. Verfahren nach Anspruch 6,
**dadurch gekennzeichnet, dass** der erste Vakuumschlauch (1) und das zweite Rohr (2) aus Polyethylen bestehen und das Verschweißungsmittel (5) heißes, geschmolzenes Polyethylen ist.

8. Verfahren nach einem der Ansprüche 1 bis 5,
**dadurch gekennzeichnet, dass** der Klebstoff ein Heißschmelzklebstoff ist und das zweite Rohr (2) in den ersten Vakuumschlauch (1) geklebt wird.

9. Verfahren nach einem der Ansprüche 1 bis 8,
**dadurch gekennzeichnet, dass** das zweite Rohr (2) wenigstens einen elektrischen Leiter umfasst.

10. Vorrichtung zur Herstellung einer flexiblen Schlauchkombination, umfassend einen ersten Vakuumschlauch (1) mit einem großen Durchmesser, eine innere Wand 6 und einen Eingang (17), wobei in dem ersten Vakuumschlauch (1) in Längsrichtung wenigstens ein zweites Plastikrohr (2) mit einem kleinen Durchmesser mittels einer äußeren Wand (7) über einen vorbestimmten Teil seiner Länge befestigt ist,
**dadurch gekennzeichnet, dass** die Vorrichtung Mittel (8, 10) zum Aufbringen eines Heißklebstoffs (5) im flüssigen Zustand in Längsrichtung auf die äußere Wand (7) des zweiten Rohres (2) und Mittel (3), welche vorgesehen sind um einen vorbestimmten Teil des zweiten Rohres (2) aufzunehmen und diesen Teil in einen vorbestimmten Abschnitt des ersten Vakuumschlauchs (1) nahezu gleichzeitig mit dem Aufbringen des Klebstoffs (5) einzuführen und Mittel (13, 14), um einen vorbestimmten Teil des ersten Vakuumschlauchs (1) in Längsrichtung in der Art zu komprimieren, dass der Klebstoff (5) mit einem vorbestimmten Teil der inneren Wand (6) des ersten Vakuumschlauchs (1) in Kontakt tritt und Mittel (14), um wenigstens teilweise den ersten Vakuumschlauch (1) zu unterstützen, umfasst.

11. Vorrichtung nach Anspruch 10,
**dadurch gekennzeichnet, dass** die Mittel (3) einen Dorn, welcher mit wenigstens einer Vertiefung (4) zur Aufnahme eines vorbestimmten Teils des zweiten Rohres (2) versehen ist, umfassen.

12. Vorrichtung nach einem der Ansprüche 10 oder 11,
**dadurch gekennzeichnet, dass** die Vorrichtung mit einem Drehtisch (12) zur Aufnahme mehrerer Dorne (3) versehen ist.

## Revendications

1. Procédé pour produire un ensemble de tuyau flexible comprenant un premier tuyau flexible à vide (1) ayant un grand diamètre, une paroi interne (5) et une entrée (17), dans lequel premier tuyau flexible à vide (1) au moins un deuxième tube (2) ayant un petit diamètre est attaché dans le sens longitudinal par sa paroi extérieure (7) sur une partie prédéterminée de sa longueur, **caractérisé en ce qu'**un adhésif (5) chaud à l'état liquide est appliqué dans le sens longitudinal sur ladite partie prédéterminée de la paroi extérieure (7) du deuxième tube (2) et ladite partie prédéterminée du deuxième tube (2) est introduite par ladite entrée (17) dans le sens longitudinal dans une partie prédéterminée du premier tuyau flexible à vide (1) quasi simultanément à l'application de l'adhésif, après quoi ladite partie prédéterminée du premier tuyau flexible à vide (1) est comprimée de telle manière que la paroi intérieure (6) du premier tuyau flexible à vide soit mise en contact avec l'adhésif (5), ladite partie prédéterminée du premier tuyau flexible à vide (1) étant supportée sur au moins une partie de sa longueur pendant la compression.

2. Procédé selon la revendication 1, **caractérisé en ce que** ladite partie prédéterminée du deuxième tube (2) est préalablement introduite dans un mandrin (3) pourvu d'un évidement (4) pour recevoir ladite partie prédéterminée, et le mandrin (3) est introduit dans le sens longitudinal dans la partie prédéterminée du premier tuyau flexible à vide (1) avec le deuxième tube (2), et le mandrin (3) est retiré de l'ensemble de tuyau flexible après compression.

3. Procédé selon une quelconque des revendications 1 ou 2, **caractérisé en ce que** l'adhésif est appliqué sur presque toute la longueur du deuxième tube (2), et le deuxième tube (2) est attaché au premier tuyau flexible à vide (1) sur presque toute sa longueur, et le premier tuyau flexible à vide (1) est comprimé sur presque toute sa longueur et est supporté pendant ladite compression sur presque toute sa longueur.

4. Procédé selon une quelconque des revendications 1 à 3, **caractérisé en ce que** le premier tuyau flexible à vide (1) est comprimé avec une pression entre 0 et 150 bars.

5. Procédé selon une quelconque des revendications 1 à 4, **caractérisé en ce que** le premier tuyau flexible à vide (1) est comprimé pendant 1 - 50 s, de préférence entre 5 - 25 s.

6. Procédé selon une quelconque des revendications 1 à 5, **caractérisé en ce que** le premier tuyau flexible à vide (1) et le deuxième tube (2) sont faits dans la même matière, et l'adhésif (5) est un agent de soudage, et le deuxième tube (2) est soudé dans le premier tuyau flexible à vide (1).

7. Procédé selon la revendication 6, **caractérisé en ce que** le premier tuyau flexible à vide (1) et le deuxième tube (2) sont en polyéthylène, et l'agent de soudage est du polyéthylène en fusion.

8. Procédé selon une quelconque des revendications 1 à 5, **caractérisé en ce que** l'adhésif est une colle en fusion et le deuxième tube (2) est collé dans le premier tuyau flexible à vide (1).

9. Procédé selon une quelconque des revendications 1 à 8, **caractérisé en ce que** le deuxième tube (2) comprend au moins un conducteur électrique.

10. Dispositif pour produire un ensemble de tuyau flexible, comprenant un premier tuyau flexible à vide (1) ayant un grand diamètre, une paroi intérieure (6) et une entrée (17), dans lequel premier tuyau flexible à vide (1) au moins un deuxième tube (2) ayant un petit diamètre est attaché dans le sens longitudinal par sa paroi extérieure (7) sur une partie prédéterminée de sa longueur, **caractérisé en ce que** le dispositif comprend des moyens (8, 10) pour appliquer un adhésif (5) chaud à l'état liquide dans le sens longitudinal sur la paroi extérieure (7) du deuxième tube (2), et des moyens (3) qui sont prévus pour contenir une partie prédéterminée du deuxième tube (2) et pour introduire cette partie dans une partie prédéterminée du premier tuyau flexible à vide (1) quasi simultanément à l'application de l'adhésif (5), et des moyens (13, 14) pour comprimer une partie prédéterminée du premier tuyau flexible à vide (1) dans le sens longitudinal de telle manière que l'adhésif (5) soit mis en contact avec une partie prédéterminée de la paroi intérieure (6) du premier tuyau flexible à vide (1), et des moyens (14) pour supporter au moins en partie le premier tuyau flexible à vide (1).

11. Dispositif selon la revendication 10, **caractérisé en ce que** lesdits moyens (3) comprennent un mandrin équipé d'au moins un évidement (4) pour recevoir une partie prédéterminée du deuxième tube (2).

12. Dispositif selon une quelconque des revendications 10 ou 11, **caractérisé en ce que** le dispositif est pourvu d'une table tournante (12) pour contenir une pluralité de mandrins (3).
